# DEMANDE DE BREVET EUROPEEN

(11) **EP 1 582 508 A2**
(43) Date de publication de la demande: **05.10.2005**
(21) Numéro de dépôt: 05300173.1
(22) Date de dépôt: 09.03.2005
(51) Int. Cl.: C04B 18/10, C04B 7/28, C03C 1/00, C03C 1/02, C03C 13/00

(54) **Procédé de traitement de résidus d'épuration des fumées d'incineration d'ordures menagères et produit obtenu**

(30) Priorité: 10.03.2004 FR 0450492
(71) Demandeur: Marcadier, Eric, 33000 Bordeaux (FR)
(72) Inventeur: Marcadier, Eric, 33000 Bordeaux (FR)
(74) Mandataire: Fantin, Laurent

(57) **Abrégé**

L'objet de l'invention est une utilisation d'un vitrifiat de Réfiom comme composé secondaire dans un clinker en cimenterie.

L'invention concerne aussi l'utilisation d'un vitrifiat de Réfiom dans le milieu de la route, par sa capacité à produire des fines d'attrition sous les effets des différentes manutentions, du malaxage, du transport, du répandage et surtout du compactage par des engins lourds.

## Description

La présente invention concerne un procédé de traitement de résidus d'épuration des fumées d'incinération d'ordures ménagères.

L'invention couvre aussi le produit obtenu.

Le problème de l'élimination des déchets est de plus en plus important et préoccupe les collectivités qui en ont la charge.

Dans toutes les démarches industrielles, les acteurs sont soumis aux contraintes environnementales qui sont encadrées par des accords locaux, régionaux, nationaux et de plus en plus internationaux.

Il est des contraintes particulièrement draconiennes liées à l'émission de gaz susceptibles de modifier l'effet de serre qui influe grandement sur les climats.

Or, l'élimination des déchets passe en grande partie par de la consommation d'énergie et donc par de l'émission de gaz de combustion. On se trouve devant un cercle vicieux.

Cet effet de serre qui consiste à piéger les rayonnements réémis par la terre dans le spectre des infrarouges est notamment provoqué par la présence dans les couches de l'atmosphère de dioxyde de carbone, de méthane et de protoxyde d'azote générés par l'activité humaine pour l'essentiel.

Les études publiées montrant que 60% de l'augmentation de dioxyde de carbone est liée à la combustion de combustibles fossiles.

Si le secteur des transports est responsable d'une grande partie de ces émissions, il n'en demeure pas moins que ce secteur et d'autres secteurs comme la sidérurgie, l'industrie du verre, la papeterie et les cimenteries conduisent à consommer plus de 75% de l'énergie industrielle.

En ce qui concerne l'élimination des déchets, il convient d'analyser les conditions et le bilan de l'élimination en elle-même mais aussi la situation des résidus obtenus, notamment leur valorisation.

Par ailleurs, le secteur de la cimenterie étant très gourmand en énergie, il est intéressant d'étudier l'opportunité d'un effet de synergie entre élimination des déchets et utilisation de produits issus de cimenteries et c'est l'objectif de la présente invention.

En effet, pour la construction, on connaît le ciment qui est issu de calcaire pour 80% environ et d'argile pour 20% environ.

Le cru obtenu est chauffé à 1450°C pour conduire à l'obtention d'un clinker de ciment.

Ce clinker est broyé et additionné de gypse pour régulariser la prise et on obtient ainsi le Ciment Portland Artificiel.

Généralement, ce procédé, décrit de façon simple, est plus complexe en ce sens que des constituants secondaires peuvent être additionnés : par exemple, on peut indiquer les laitiers de haut fourneau, les cendres volantes de centrales thermiques ou les pouzzolanes.

La réaction bien connue lors de la production de clinker est la transformation du calcaire en chaux avec émission de dioxyde de carbone.

Pour limiter la production de dioxyde de carbone, on peut aussi choisir des liants naturels comme la chaux naturelle ou des liants artificiels comme le laitier de haut fourneau. Le laitier de haut fourneau présente en effet des propriétés liantes à très hautes performances.

La présente invention intéresse les Résidus d'Epuration des Fumées d'Incinération des Ordures Ménagères plus connus sous le vocable Réfiom qui sera utilisé pour la suite de la description.

En effet, lors de l'incinération des ordures ménagères, on distingue d'une part les mâchefers qui sont les résidus de combustion et qui peuvent être écoulés sous certaines conditions, de façon connue, notamment par intégration dans les compositions d'enrobés routiers ou de ballast ferroviaire et d'autre part lesdits Réfiom.

Ces Réfiom sont particuliers en ce sens qu'ils incluent de façon très concentrée les différents polluants.

Une première solution simple voire simpliste consiste à stabiliser ces déchets et à les solidifier dans des matrices avec des liants hydrauliques ou organiques. Les blocs ainsi obtenus sont stockés sans aucune utilisation possible.

Une autre solution plus active consiste à traiter ces Réfiom par des moyens puissants tels que des torches à plasma en sorte de vitrifier ces déchets. Certes, il y a formation d'un verre mais les toxiques restent présents, par contre ils sont intégrés dans des produits de très grande dureté empêchant le relargage pendant une très longue durée.

On obtient ainsi un vitrifiat par différentes méthodes y compris au moyen d'arcs électriques.

Les inconvénients restent nombreux en ce sens que les températures au sein des fours est très élevée de 1500°C à 4000°C et notamment les sels des métaux lourds émis doivent à leur tour être traités.

On connaît un procédé de traitement de ces Réfiom qui assure aussi une vitrification mais avec une étape d' inertage préalable des polluants, ce procédé ayant donné lieu à un brevet européen N°1 047 478.

Ce brevet prévoit une étape d'attrition associée à une dilution, une étape de traitement chimique par lixiviation alcaline et une étape de traitement thermique permettant une opération de vitrification.

Cette étape de vitrification est importante en ce sens qu'elle est réalisée en autocreuset, ce qui évite le recours à des revêtements réfractaires qui sont agressés par les conditions de travail. De plus, elle est réalisée à des températures de 1200°C qui évitent l'émission de gaz toxiques et le paradoxe de générer des fumées conduisant à des Réfiom de Réfiom de fait encore plus polluants.

Le résultat de ce procédé est la production d'un vitrifiat dont il n'est prévu aucune valorisation autre que celle d'une intégration en tant que charge minérale. La présente invention vise à une intégration d'un tel vitrifiat en tant que liant hydraulique comme composé secondaire dans les ciments ou en tant que liant hydraulique de graves traitées, en application routière.

Plus particulièrement, l'invention couvre une utilisation d'un vitrifiat de Réfiom comme composé secondaire dans un clinker en cimenterie.

Ce vitrifiat de Réfiom est notamment obtenu après une étape d'attrition de cendres de Réfiom associée à une dilution, une étape de traitement chimique par lixiviation alcaline et une étape de traitement thermique réalisée en autocreuset, à des températures de 1200°C.

L'invention couvre aussi l'utilisation d'un vitrifiat de Réfiom dans le milieu de la route, par sa capacité à produire des fines d'attrition sous les effets des différentes manutentions, du malaxage, du transport, du répandage et surtout du compactage par des engins lourds.

Ce vitrifiat de Réfiom peut être obtenu après une étape d'attrition de cendres de Réfiom associée à une dilution, une étape de traitement chimique par lixiviation alcaline et une étape de traitement thermique réalisée en autocreuset, à des températures de 1200°C.

L'invention couvre aussi un procédé de traitement de Réfiom obtenus après une étape d'attrition de cendres de Réfiom associée à une dilution, une étape de traitement chimique par lixiviation alcaline et une étape de traitement thermique réalisée en autocreuset, à des températures de 1200°C, selon lequel on ajoute des adjuvants dans la phase liquide, avant refroidissement.

Le vitrifiat de Réfiom ainsi obtenu présente des capacités hydrauliques.

On peut aussi ajouter des colorants dans la phase liquide, avant refroidissement.

Une application extrêmement valorisante est la fabrication de fibres de Réfiom obtenues par tout moyen adapté à partir du vitrifiat sous forme liquide avant refroidissement.

La présente invention est décrite en détail suivant un mode de réalisation qui va suivre incluant les résultats d'analyse permettant de confirmer les applications envisagées et l'aptitude du vitrifiat de Réfiom à remplir les conditions nécessaires à ces applications.

La comparaison est effectuée en regard des laitiers dont on sait qu'ils présentent des propriétés hydrauliques et qu'ils sont utilisés par exemple dans les ciments comme composé secondaire ainsi que mentionné en préambule.

La composition chimique est un facteur prépondérant car l'hydraulicité est influencée par l'état de liaison des composés majeurs indiqués ci-avant et des réseaux qu'ils constituent.

Un laitier de haut fourneau présente une composition comprenant en moyenne :
- chaux CaO pour 38 à 46%,
- silice SiO₂ pour 31 à 36%,
- alumine Al₂O₃ pour 9 à 18%,
- magnésie MgO pour 4 à 10%, et
- oxyde de sodium Na₂O et oxyde de potassium K₂O pour 0,5 à 2%.

On peut aussi analyser les différents indices relatifs à l'hydraulicité pour ce même laitier de haut fourneau :
- CaO / SiO₂ = 1,22
- (CaO + MgO) / SiO₂ = 1,41
- (CaO + MgO + Al₂O₃) / SiO₂ = 1,71
- (CaO + MgO) / (SiO₂ + Al₂O₃/2) = 1,22
- C/A = 473

Les indices sont tout à fait adaptés et prouvent la qualité hydraulique des laitiers de haut fourneau.

Ce qui qualifie l'hydraulicité d'un laitier de haut fourneau pour la fabrication des ciments est aussi son taux de vitrification.

Le taux de vitrification est le rapport du taux de la partie vitreuse par rapport à la partie cristallisée et il est important que la vitrification, c'est-à-dire la structure amorphe soit très importante, les normes connues requérant un taux de phase vitreuse d'au moins 2/3 de la masse totale.

Un autre paramètre important est la résistance mécanique à la compression. A cet effet, on moud le laitier avec un broyeur pour atteindre une surface spécifique de 450 m²/g.

On réalise une éprouvette avec 50% de laitier et 50% de ciment Portland et on obtient une résistance à la compression exprimée en MPa de :
- 0,73 à 7 jours, et
- 1,05 à 28 jours.

En comparaison à ce laitier de haut fourneau, on analyse un sable de vitrifiat de Réfiom, obtenu par le procédé selon l'enseignement du brevet européen N°1 047 478 qui est ensuite broyé.

Les résultats concernant la composition chimique sont les suivants :
- chaux CaO pour 27%,
- silice SiO₂ pour 39%,
- alumine Al₂O₃ pour 11%,
- magnésie MgO pour 3%, et
- oxyde de sodium Na₂O + oxyde de potassium K₂O pour 13%.

On constate que le vitrifiat étudié répond aux critères généralement admis pour constituer un additif pour béton hydraulique fixé par des normes.

En effet on retrouve par exemple une des conditions imposées à savoir :
- cumul massique de CaO + MgO + SiO₂ > 2/3 de la masse totale, ce qui est le cas.

On peut ajouter que le sable de vitrifiat de Réfiom présente une composition chimique lui conférant des propriétés hydrauliques, ce qui d'ailleurs est constaté par les différents indices chimiques d'hydraulicité :
- CaO / SiO₂ = 0,70
- (CaO + MgO) / SiO₂ = 0,78
- (CaO + MgO + Al₂O₃) / SiO₂ = 1,05
- (CaO + MgO) / (SiO₂ + Al₂O₃/2) = 0,68
- C/A = 302

Quant à l'analyse aux rayons X, elle prouve une vitrification proche de 100%.

On peut aussi comparer les paramètres mécaniques avec un sable de vitrifiat de Réfiom broyé avec un broyeur à boulet pour atteindre une surface spécifique de 392 m²/g.

On réalise une éprouvette avec 50% de vitrifiat de Réfiom et 50% de ciment Portland.

On obtient une résistance à la compression exprimée en MPa de :
- 0,50 à 7 jours, et
- 0,79 à 28 jours.

On constate bien des valeurs du même ordre de grandeur. On constate surtout une augmentation du pouvoir hydraulique entre 7 et 28 jours de près de 58%, ce qui est encourageant, la norme à 28 jours étant dans la réalité très courte.

On constate que l'écart faible des paramètres d'hydraulicité entre le laitier et le sable de vitrifiat peut encore être réduit si l'on ajoute des compléments minéraux au ternaire comprenant de la chaux, de la silice et de l'alumine. Ces adjonctions restent faibles et n'engendrent que des surcoûts très réduits.

Les capacités hydrauliques constatées permettent de considérer le vitrifiat de Réfiom comme un composé doté de capacités hydrauliques autorisant son intégration comme constituant dans les clinkers, diminuant ainsi la quantité de ciments Portland fabriqués à grand renfort d'énergie.

Ce laitier vitrifié permet aussi selon l'invention des applications dans le milieu de la route car la réactivité de ce vitrifiat prouve sa capacité à produire des fines d'attrition sous les effets des différentes manutentions, du malaxage, du transport, du répandage et surtout du compactage par des engins lourds, directement sans broyage fin particulier.

On peut aussi noter que le vitrifiat, avant son refroidissement généralement rapide, est liquide.

Aussi, plutôt que de prévoir des traitements ultérieurs nécessitant un chauffage à haute température pour le remettre à l'état liquide, il est possible de profiter de cette étape de fusion avant vitrification pour réaliser par exemple des colorations, des inclusions d'adjuvants ou surtout la génération de fibres de vitrifiat de Réfiom aptes à être associées à des bétons en vu de les renforcer.

Les moyens pour assurer le tirage des fibres sont choisis parmi ceux existants et bien connus pour les applications à la fibre de verre.

Dans ce cas, la valorisation est encore plus importante.

## Revendications

1. Utilisation d'un vitrifiat de Réfiom comme composé secondaire dans un clinker en cimenterie.

2. Utilisation d'un vitrifiat de Réfiom selon la revendication 1, **caractérisée en ce que** le vitrifiat est obtenu après une étape d'attrition de cendres de Réfiom associée à une dilution, une étape de traitement chimique par lixiviation alcaline et une étape de traitement thermique réalisée en autocreuset, à des températures de 1200°C.

3. Utilisation d'un vitrifiat de Réfiom dans le milieu de la route, par sa capacité à produire des fines d'attrition sous les effets des différentes manutentions, du malaxage, du transport, du répandage et surtout du compactage par des engins lourds.

4. Utilisation d'un vitrifiat de Réfiom selon la revendication 3, **caractérisée en ce que** le vitrifiat de Réfiom est obtenu après une étape d'attrition de cendres de Réfiom associée à une dilution, une étape de traitement chimique par lixiviation alcaline et une étape de traitement thermique réalisée en autocreuset, à des températures de 1200°C.

5. Procédé de traitement de Réfiom obtenus après une étape d'attrition de cendres de Réfiom associée à une dilution, une étape de traitement chimique par lixiviation alcaline et une étape de traitement thermique réalisée en autocreuset, à des températures de 1200°C, **caractérisé en ce que** l'on ajoute des adjuvants dans la phase liquide, avant refroidissement.

6. Vitrifiat de Réfiom obtenu par le procédé selon la revendication 5, **caractérisé en ce qu'**il présente des capacités hydrauliques.

7. Procédé de traitement de Réfiom obtenus après une étape d'attrition de cendres de Réfiom associée à une dilution, une étape de traitement chimique par lixiviation alcaline et une étape de traitement thermique réalisée en autocreuset, à des températures de 1200°C, **caractérisé en ce que** l'on ajoute des colorants dans la phase liquide, avant refroidissement.

8. Fibres de Réfiom obtenues par tout moyen adapté à partir du vitrifiat sous forme liquide avant refroidissement dans le cadre du procédé selon la revendication 5, 6 ou 7.
